# EUROPEAN PATENT APPLICATION

(11) **EP 2 259 243 A2**
(43) Date of publication of application: **08.12.2010**
(21) Application number: 10179673.8
(22) Date of filing: 14.10.2005
(51) Int. Cl.: G08C 17/02

(54) **Remote control system, remote control method, remote controller and electronic device**

(30) Priority: 14.10.2004 JP 2004300324
(62) Divisional of application: 05292164.0
(71) Applicant: Sony Corporation, Tokyo 108-0075 (JP)
(72) Inventor: Sato, Hideki, TOKYO Tokyo 108-0075 (JP)
(74) Representative: Pecher, Gilles

(57) **Abstract**

A remote control system for a user to operate at least one device using a remote controller (10) includes device specification means (11, 14) for specifying a device located in front of the user who is holding the remote controller (10) via a first communication medium under a constraint on at least one of directivity and a transmittable distance, and remote control means (11, 15) for transmitting a remote control request from the remote controller (10) to the specified device via a second communication medium under less constraint on the directivity and the transmittable distance in accordance with an instruction input from the user.

## Description

### BACKGROUND OF THE INVENTION

### 1. Field of the Invention

The present invention relates to a remote control system, a remote control method, a remote controller, and an electronic device for remotely operating a television receiver, a digital versatile disk (DVD) player, another type of audio-visual (AV) device, another type of consumer electronics (CE) device, an information device, or the like using the remote controller, and more particularly, to a remote control system, a remote control method, a remote controller, and an electronic device realizing remote control that is free of constraints on the directivity and the transmittable distance from the remote controller to the device to be operated.

More specifically, the present invention relates to a remote control system, a remote control method, a remote controller, and an electronic device capable of bidirectional communication between the remote controller and the device to be operated using a network, such as TCP/IP, and more particularly, to a remote control system, a remote control method, a remote controller, and an electronic device for performing an operation using the remote controller for a device located in front of a user as the device to be operated from among a plurality of devices free of constraints on the directivity and the transmittable distance.

### 2. Description of the Related Art

Recently, various home information appliances, such as television receivers, video recording/playback devices, and AV devices, have been developed and manufactured. Such home information appliances have been widely used in general homes and other living spaces. Basically, such information devices are directly operated via a user interface, such as an operation button and a volume control switch, installed in the device main unit. However, recently, almost all the devices have been able to be remotely operated using remote controllers.

For example, in the field of consumer-oriented electric and electronic devices, such as home appliances, "infrared remote controllers" adopting an amplitude modulation (AM) method for remotely inputting user operation commands to devices have been developed and have already been established.

Such a communication system based on infrared radiation has advantages of low cost, less power consumption, and less legal constraints in countries. In addition, since wiring is not necessary, a connector for connecting a cable is also not necessary. Thus, the cost can be reduced. Furthermore, since a connector is not connected or disconnected for connection or disconnection, mechanical exhaustion can be prevented.

However, the communication system based on infrared radiation has problems relating to directivity and a transmittable range. Communication can be established only when a light-receiving portion of a receiver is set in the angle of field of a transmitter. This is an important constraint in use (for example, see Japanese Unexamined Patent Application Publication No. 2002-165281). In addition, since the infrared communication system is basically based on unidirectional communication, the transmitter cannot receive a response from the receiver. Thus, delivery confirmation cannot be performed.

Obviously, if both devices that perform communication have an infrared transmission function and an infrared reception function, bidirectional communication can be performed. However, since infrared communication still has the problem of directivity, users of the devices must perform a transmission operation toward the direction of a destination device, and this is inconvenient.

For example, a communication device that relays an infrared operation signal for an electronic device transmitted from a remote controller and that operates an electronic device arranged in a position to which an infrared operation signal transmitted from a dedicated remote controller does not directly reach is suggested (for example, see Japanese Unexamined Patent Application Publication No. 2003-259464). This communication device eliminates a carrier component to extract a pulse shape component from the infrared operation signal received from the remote controller, and transmits the extracted pulse shape component via a network. The communication device also modulates an infrared carrier using the pulse shape component, and transmits the modulated infrared carrier to the electronic device to be operated.

In addition, a remote operation system having a simple device structure not using a relay device and the like is suggested (for example, see Japanese Unexamined Patent Application Publication No. 2003-143670). In this case, a controller transmits to a device to be controlled capability information representing capability of input operations, and the device to be controlled generates and transmits remote control processing information for forming a user interface that can be realized in a range of the received capability information. The controller forms the user interface using the remote control processing information. Thus, a user is able to perform a remote control operation via the user interface.

However, in such remote control systems, although a device to be operated is not limited in a transmittable area of an infrared signal, a particular device cannot be specified as an object to be operated when a plurality of devices can be operated. For example, in a case where television receivers are installed in respective rooms and the television receivers can transmit remote control commands via a network, a device cannot be specified as a device to be operated. In addition, in a case where a plurality of devices that can be operated by remote control is installed in a room, there is no way to designate a device located in front of a user as a device to be operated.

### SUMMARY OF THE INVENTION

It is desirable to provide a remote control system, a remote control method, a remote controller, and an electronic device capable of remotely operating a television receiver, a DVD player, another type of AV device, another type of CE device, an information device, or the like using the remote controller.

It is also desirable to provide a remote control system, a remote control method, a remote controller, and an electronic device capable of realizing remote control that is free of constraints on the directivity and the transmittable distance from the remote controller to the device to be operated.

It is also desirable to provide a remote control system, a remote control method, a remote controller, and an electronic device capable of bidirectional communication between the remote controller and the device to be operated using a network, such as TCP/IP.

It is also desirable to provide a remote control system, a remote control method, a remote controller, and an electronic device capable of performing an operation using the remote controller on a device located in front of a user specified as the device to be operated from among a plurality of devices free of constraints on the directivity and the transmittable distance.

A remote control system according to an embodiment of the present invention for a user to operate at least one device using a remote controller includes device specification means for specifying a device located in front of the user who is holding the remote controller via a first communication medium under a constraint on at least one of directivity and a transmittable distance, and remote control means for transmitting a remote control request from the remote controller to the specified device via a second communication medium under less constraint on the directivity and the transmittable distance in accordance with an instruction input from the user. The first communication medium may be based on an infrared communication system, and the second communication medium may be based on a local network in which each of the remote controller and the device has a unique network address.

The term "system" mentioned here refers to a logical aggregation of a plurality of devices (or functional modules implementing particular functions). Such devices or functional modules may be arranged in a single case or may be arranged separately.

The device specification means may specify the device located in front of the user in accordance with a response to a device search request, the response being transmitted via the second communication medium from the device that receives the device search request transmitted via the first communication medium from the remote controller.

More specifically, the remote controller may transmit the device search request, which includes address information on the remote controller on the second communication medium, and the device may transmit the response to the device search request via the second communication medium using the address information included in the device search request. The remote controller may transmit the remote control request via the second communication medium using address information on the device included in the response to the device search request.

The remote control system may further include data transmission means for transmitting data from the device to the remote controller via the second communication medium. In this case, the remote controller may reproduce and output data, such as a moving image, received from the device via the second communication medium.

Recently, communication systems using infrared radiation for remotely operating devices have been widely adopted. Such communication systems by infrared radiation have advantages of low cost, less power consumption, and less legal constraints in countries. However, such communication systems by infrared radiation have a problem of directivity. Communication can be established only when a light-receiving portion of a receiver is set in the angle of field of a transmitter. This is an important constraint in use. In addition, since such infrared communication systems are basically based on unidirectional communication, the transmitter cannot receive a response from the receiver. Thus, delivery confirmation cannot be performed.

In contrast, in the remote control system according to the present invention, a remote control operation is performed using a communication medium, such as an IP network, under less constraint on directivity and a range in which communication can be performed.

According to the remote control system using such an IP network, since bidirectional communication can be performed between a remote controller and a device to be operated, technical advantages that reliable communication can be performed by delivery (response) confirmation, that a complicated command system utilizing a GUI operation can be handled, and that large-volume data transmission, such as moving image streaming, can be performed using a relatively wide bandwidth are achieved. For example, a television receiver to be operated by remote control distributes received moving image data, such as a slave window, to an IP remote controller via an IP network (uplink), and a user is able to view the slave window on a display screen of the IP remote controller.

However, since the IP remote controller that controls a device on the network is non-directional, that is, transparent, the IP remote controller cannot operate a specified device located in front of the user.

Thus, in the remote control system according to the present invention, although remote control is performed using a TCP/IP network, a function of an infrared remote controller is also used in order to specify a device.

More specifically, a device specification process in which an IP remote controller transmits a device search command by infrared radiation and in which a device that receives the device search command reports the existence of the device to the IP remote controller via a network is performed. Since an infrared ray has a strong directivity and does not penetrate a wall, only a device located in front of a user is able to send a response. Even if a plurality of the same type of devices is located in front of the user, a device to be controlled can be specified using the same mechanism of an infrared remote controller that is capable of handling a plurality of devices.

Accordingly, a remote control system, a remote control method, a remote controller, and an electronic device capable of remotely operating a television receiver, a DVD player, another type of AV device, another type of CE device, an information device, or the like using the remote controller can be provided.

In addition, a remote control system, a remote control method, a remote controller, and an electronic device capable of realizing remote control that is free of constraints on the directivity and the transmittable distance from the remote controller to the device to be operated can be provided.

In addition, a remote control system, a remote control method, a remote controller, and an electronic device capable of bidirectional communication between the remote controller and the device to be operated using a network, such as TCP/IP, can be provided.

In addition, a remote control system, a remote control method, a remote controller, and an electronic device capable of performing an operation using the remote controller on a device located in front of a user specified as the device to be operated from among a plurality of devices free of constraints on the directivity and the transmittable distance can be provided.

Further objects, features, and advantages of the present invention will become apparent from the following description of exemplary embodiments and with reference to the attached drawings.

### BRIEF DESCRIPTION OF THE DRAWINGS

Fig. 1 schematically shows an example of the structure of a remote control system according to an embodiment of the present invention;
Fig. 2 schematically shows the functional structure of an IP remote controller;
Fig. 3 shows the sequence of an IP remote control operation in the remote control system;
Fig. 4 is a flowchart showing a process performed by the remote controller in the remote control system;
Fig. 5 is a flowchart showing a process for waiting for a response to a device search request; and
Fig. 6 is a flowchart showing a process performed by a device to be controlled in the remote control system.

### DESCRIPTION OF THE PREFERRED EMBODIMENTS

Embodiments of the present invention will be described with reference to the drawings.

The present invention relates to a remote control system for remotely operating a television receiver, a DVD player, another type of AV device, another type of CE device, an information device, or the like using a remote controller.

Although a communication system based on infrared radiation, that is, infrared remote control, is generally adopted for a remote control operation for a device, such an infrared communication system has a problem of directivity. Communication can be established only when a light-receiving portion of a receiver is set in the angle of field of a transmitter. This is an important constraint in use. In addition, since such an infrared communication system is basically based on unidirectional communication, the transmitter cannot receive a response from the receiver. Thus, delivery confirmation cannot be performed.

In the embodiments, instead of an infrared transmission channel, a remote control system utilizing a remote controller using an IP network, that is, an IP remote controller, is established. According to such an IP remote controller, a remote control operation can be realized using a communication medium under less constraint on directivity and a transmittable range. In addition, since bidirectional communication can be performed between a remote controller and a device to be operated on the IP network, technical advantages that reliable communication can be performed by delivery (response) confirmation, that a complicated command system utilizing a graphic user interface (GUI) operation can be handled, and that large-volume data transmission, such as moving image streaming, can be performed using a relatively wide bandwidth are achieved. For example, a television receiver, which is to be operated by remote control, distributes received moving image data, such as a slave window, to an IP remote controller via an IP network (uplink), and a user is able to view the slave window on a display screen of the IP remote controller.

In contrast, since the IP remote controller controlling a device on the network is non-directional, that is, transparent, the IP remote controller cannot operate a specified device located in front of the user. Thus, although remote control is performed using a TCP/IP network, a function of a known infrared remote controller is also used in order to specify a device.

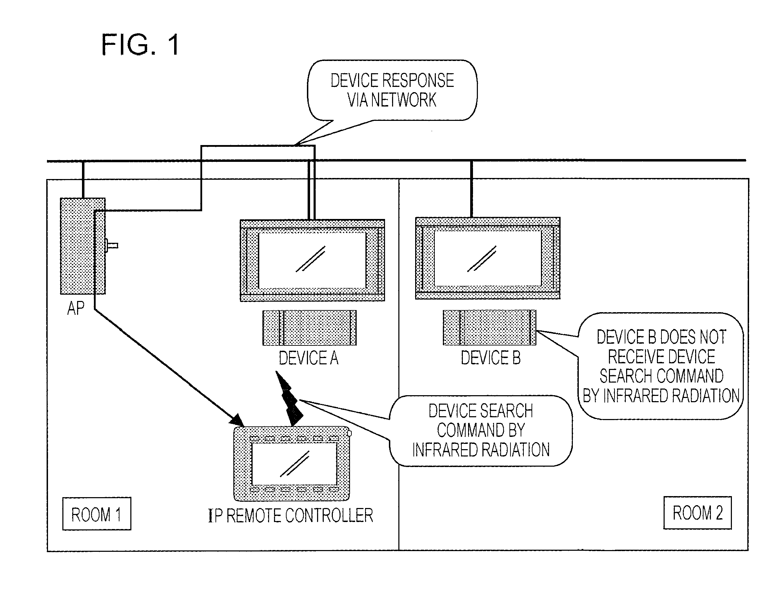

Fig. 1 schematically shows an example of the structure of a remote control system according to an embodiment of the present invention. The system shown in Fig. 1 includes an IP remote controller used by a user to operate a device and devices A and B to be operated using the IP remote controller. The devices A and B are installed in rooms 1 and 2, respectively. Both devices do not enter within a reach range of infrared radiation at the same time.

The devices A and B are, for example, television receivers, DVD players, other types of AV devices or CE devices, information devices, or the like. Each of the devices A and B is provided with a network interface as well as a function to receive infrared commands. The devices A and B are connected to each other via an IP network (local-area network (LAN)) established based on IEEE 802.3 (Ethernet^{™}) or the like.

The IP remote controller is provided with a wireless network interface as well as a function to transmit infrared commands corresponding to user operations. The IP remote controller is capable of communicating with an access point (AP) via a wireless network established based on IEEE 802.11a/b or the like. Since the AP is LAN-connected, the IP remote controller is capable of bidirectional communication with the devices A and B via the AP. The IP remote controller is capable of transmitting remote control commands via the IP network and receiving data from the devices A and B.

In addition, the IP remote controller may be provided with a display, such as a liquid crystal device (LCD). For example, the IP remote controller may reproduce and output moving image data received from the devices A and B by streaming distribution via the IP network.

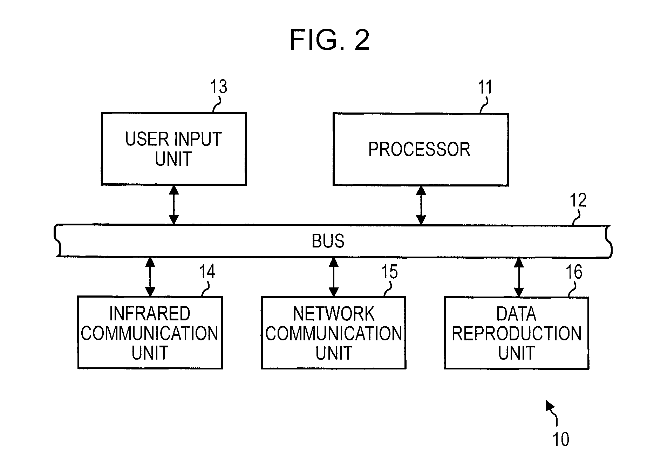

Fig. 2 schematically shows the functional structure of an IP remote controller 10. In the IP remote controller 10, a processor 11 generally controls each unit via a bus 12.

A user input unit 13 includes key operation sections, such as a numeric keypad, a volume control key, an image quality control key, and a select key. The user input unit 13 inputs an operation content input by a user for a device to be remote-controlled.

An infrared communication unit 14 transmits a device search request as an infrared signal for specifying a device located in front of the user who is holding the IP remote controller 10. Obviously, the infrared communication unit 14 may be based on the serial infrared remote control system (SIRCS), which is an infrared communication standard widely used for remote controllers for AV devices and may also be provided with a function to transmit normal infrared commands.

A network communication unit 15 is provided with a network interface for communicating with an AP via a wireless network established based on, for example, IEEE 802.11a/b or the like. Identification information including a media access control (MAC) address and an IP address that are unique on the network is set in the network communication unit 15. In this embodiment, the network communication unit 15 transfers a remote control request corresponding to an instruction received via the user input unit 13 to a device to be controlled via the network.

The data reproduction unit 16 has a function to decode moving image data and sound data and to reproduce and output the decoded moving image data and sound data. In this embodiment, data received at the network communication unit 15 from the device to be controlled is reproduced and output by the data reproduction unit 16. For example, a television receiver to be operated by remote control distributes received moving image data, such as a slave window, to the IP remote controller 10 via the IP network (uplink), and the user is able to view the slave window on the display screen of the IP remote controller 10.

Since remote control via the IP network is non-directional, that is, transparent, the IP remote controller 10 cannot operate a specified device located in front of the user who is operating the IP remote controller 10. Thus, in this embodiment, although the IP remote controller 10 performs remote control using the TCP/IP network, the function of the infrared remote controller is also used in order to specify a device.

As shown in Fig. 1, in a case where the devices A and B installed in the rooms 1 and 2, respectively, are connected to each other via a network, when the IP remote controller issues a device search command by infrared radiation, although the device A receives the device search command and transmits a response, the device B does not transmit a response. Thus, the IP remote controller is capable of specifying a device located in front of the IP remote controller.

The IP remote controller performs remote control using the TCP/IP network. However, in order to specify a device, a function of a known infrared remote controller is also used. A specific procedure for specifying a device is as described below.
(1) The IP remote controller transmits a device search command by infrared radiation.
(2) A device receives the device search command, and reports the existence of the device to the IP remote controller via the network.
(3) Since an infrared ray has a strong directivity and does not penetrate a wall, only the device located in front of the user is able to transmit a response.
(4) Even if a plurality of the same type of devices is located in front of the user, a device to be controlled can be specified using the same mechanism of an infrared remote controller that is capable of handling a plurality of devices.

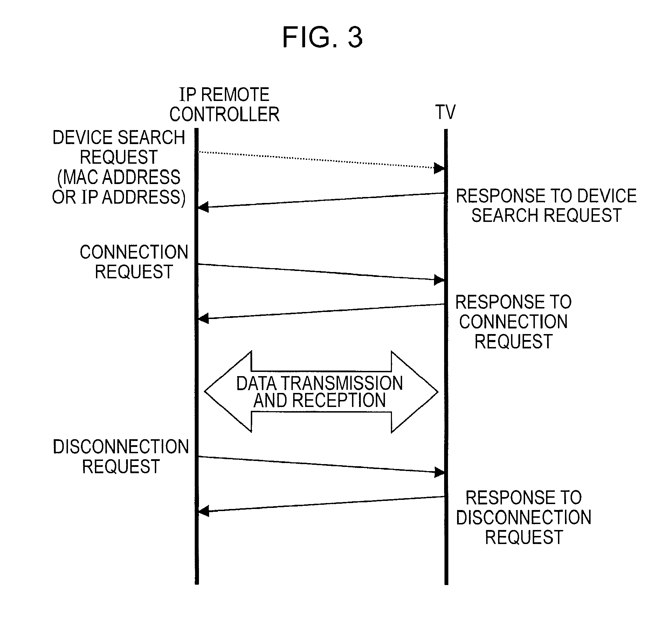

Fig. 3 shows the sequence of an IP remote control operation in the remote control system according to this embodiment.

The IP remote controller 10 issues a device search request using infrared communication. The device search result includes network identification information, such as a MAC address and an IP address of the IP remote controller 10.

A device to be operated by the IP remote controller 10, such as a television receiver, receives the device search request, and transmits a response to the device search request via the IP network.

The IP remote controller 10 receives the response to the device search request from the device located in front of the IP remote controller 10, and transmits a connection request on the IP network to the device. Then, the device transmits a response to the connection request. After a predetermined procedure, such as authentication processing, is completed, connection between the IP remote controller 10 and the device on the IP network is established.

During the establishment of connection, bidirectional data communication can be performed between the IP remote controller 10 and the device. Thus, the IP remote controller 10 is capable of transmitting a remote control command via the IP network. In addition, the device is capable of performing transmission of a relatively large volume of data, such as moving image streaming, to the IP remote controller 10 on the IP network.

Then, after the operation for data transmission and reception is completed and an instruction for disconnection is given by the user via the IP remote controller 10, the IP remote controller 10 transmits a disconnection request to the device via the IP network. Then, after the device transmits a response to the disconnection request, connection on the IP network is disconnected.

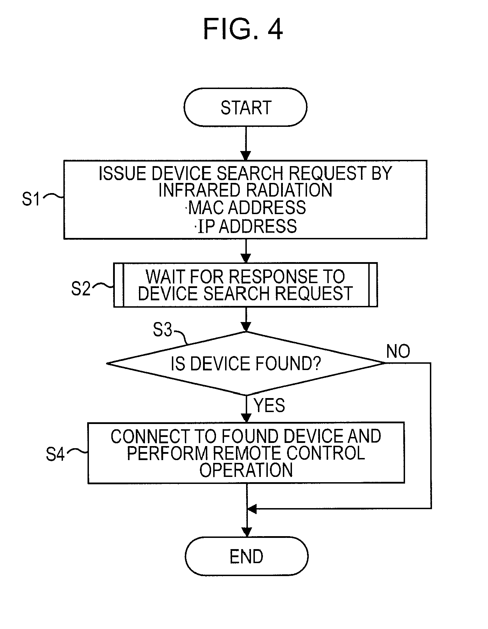

Fig. 4 is a flowchart showing a process performed by the IP remote controller 10 in the remote control system according to this embodiment.

The IP remote controller 10 issues a device search request using infrared communication (step S1). The device search request includes network identification information, such as a MAC address and an IP address of the IP remote controller 10. The IP remote controller 10 waits until a response to the device search request is transmitted from a device located in front of the IP remote controller 10 (that is, a device located in a reach area of an infrared command) (step S2).

If the IP remote controller 10 receives the response to the device search request and finds the device located in front of the IP remote controller 10 (step S3), the IP remote controller 10 operates the found device by remote control via the IP network (step S4).

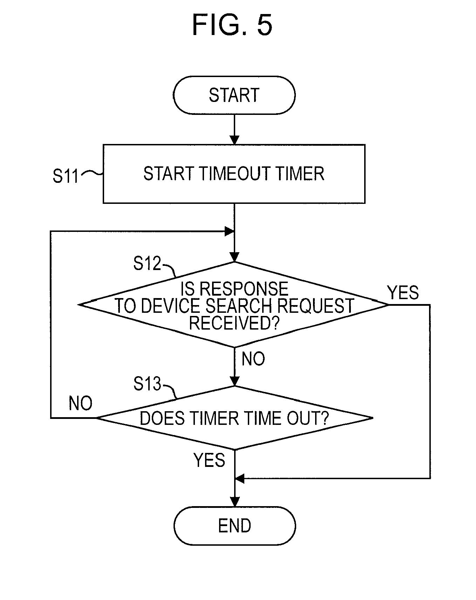

Fig. 5 is a flowchart showing a process for waiting for the response to the device search request in step S2 in Fig. 4.

After transmitting the device search request, the IP remote controller 10 starts a timeout timer (step S11).

Then, if the IP remote controller 10 receives a response to the device search request (step S12) before the timer times out (step S13), the IP remote controller 10 terminates the process for waiting for a response to the device search request. Then, the process proceeds to step S3 in Fig. 4.

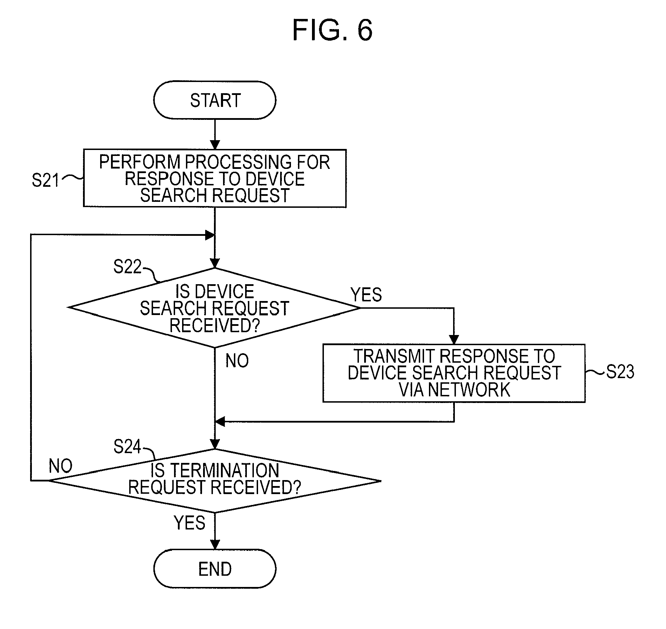

Fig. 6 is a flowchart showing a process performed by a device to be controlled (for example, a television receiver) in the remote control system according to this embodiment.

The device starts processing for a response to a device search request (step S21). If the device receives a device search request as an infrared signal (step S22), the device transmits a response to the device search request to the IP remote controller 10 via the IP network, such as a domestic LAN (step S23). Then, if the device receives a termination request from the IP remote controller 10, the device terminates the whole processing routine (step S24).

The present invention has been described with reference to a particular embodiment. However, it is obvious that modifications and substitutions may be made to the present invention by those skilled in the art without departing from the spirit and scope thereof.

Although an embodiment in which a remote controller operates a device by remote control via an IP network, such as a LAN, has been described, the present invention is not limited to this. For example, the present invention can be realized by using a non-directional and transparent network, such as a wired cable including IEEE 1394 and a universal serial bus (USB) or a wireless network including Bluetooth^{™}, and infrared (directional) communication for specifying a device located in front of a user at the same time.

In short, the present invention is disclosed by way of an example and the present invention should not be understood in a limited way. In order to determine the summary of the present invention, the claims should be referred to.

It should be understood by those skilled in the art that various modifications, combinations, sub-combinations and alterations may occur depending on design requirements and other factors insofar as they are within the scope of the appended claims or the equivalents thereof.

### CLAUSES

1. A remote control system for a user to operate at least one device A, B using a remote controller, comprising:
   device specification means 11, 14 for specifying a device located in front of the user who is holding the remote controller 10 via a first communication medium under a constraint on at least one of directivity and a transmittable distance; and
   remote control means 11, 15 for transmitting a remote control request from the remote controller 10 to the specified device via a second communication medium under less constraint on the directivity and the transmittable distance in accordance with an instruction input from the user.
2. The remote control system according to Clause 1, wherein:
   the first communication medium is based on an infrared communication system; and
   the second communication medium is based on a local network in which each of the remote controller 10 and the device A, B has a unique network address.
3. The remote control system according to Clause 1, wherein the device specification means 14 specifies the device located in front of the user in accordance with a response to a device search request, the response being transmitted via the second communication medium from the device that receives the device search request transmitted via the first communication medium from the remote controller 10.
4. The remote control system according to Clause 3, wherein:
   the remote controller 10 transmits the device search request, which includes address information on the remote controller 10 on the second communication medium;
   the device transmits the response to the device search request via the second communication medium using the address information included in the device search request; and
   the remote controller 10 transmits the remote control request via the second communication medium using address information on the device included in the response to the device search request.
5. The remote control system according to Clause 1, further comprising data transmission means for transmitting data from the device to the remote controller 10 via the second communication medium.
6. A remote control method for a user to operate at least one device A, B using a remote controller 10, comprising the steps of:
   specifying a device A, B located in front of the user who is holding the remote controller 10 via a first communication medium under a constraint on at least one of directivity and a transmittable distance; and
   transmitting a remote control request from the remote controller 10 to the specified device via a second communication medium under less constraint on the directivity and the transmittable distance in accordance with an instruction input from the user.
7. The remote control method according to Clause 6, wherein:
   the first communication medium is based on an infrared communication system; and
   the second communication medium is based on a local network in which each of the remote controller and the device has a unique network address.
8. The remote control method according to Clause 6, wherein, in the device specifying step, the device located in front of the user is specified in accordance with a response to a device search request, the response being transmitted via the second communication medium from the device that receives the device search request transmitted via the first communication medium from the remote controller.
9. The remote control method according to Clause 8, wherein:
   in the device specifying step, the remote controller 10 transmits the device search request, which includes address information on the remote controller on the second communication medium, and the device transmits the response to the device search request via the second communication medium using the address information included in the device search request; and
   in the remote control request transmitting step, the remote controller transmits the remote control request via the second communication medium using address information on the device included in the response to the device search request.
10. The remote control method according to Clause 6, further comprising the step of transmitting data from the device to the remote controller via the second communication medium.
11. A remote controller 10 operating at least one device A, B, comprising:
   first communication means 14 for performing communication via a first communication medium under a constraint on at least one of directivity and a transmittable distance;
   second communication means 15 for performing communication via a second communication medium under less constraint on the directivity and the transmittable distance;
   device specification means 11, 14 for specifying a device located in front of a user who is holding the remote controller via the first communication medium;
   user input means 13 for inputting an instruction from the user; and
   remote control means 11, 15 for transmitting a remote control request to the specified device via the second communication medium in accordance with the instruction input from the user.
12. The remote controller according to Clause 11, wherein:
   the first communication medium is based on an infrared communication system; and
   the second communication medium is based on a local network in which each of the remote controller and the device has a unique network address.
13. The remote controller according to Clause 11, wherein the device specification means specifies the device located in front of the user in accordance with a response to a device search request, the response being transmitted via the second communication medium from the device that receives the device search request transmitted via the first communication medium.
14. The remote controller according to Clause 13, wherein:
   the device specification means 11, 14 transmits the device search request, which includes address information on the remote controller on the second communication medium; and
   the remote control means 11, 15 transmits the remote control request via the second communication medium using address information on the device included in the response to the device search request.
15. The remote controller according to Clause 11, further comprising:
   data reception means for receiving data transmitted from the device via the second communication medium; and
   data reproduction means for reproducing and outputting the received data.
16. An electronic device to be controlled by a remote controller, comprising:
   first communication means 14 for performing communication via a first communication medium under a constraint on at least one of directivity and a transmittable distance;
   second communication means 15 for performing communication via a second communication medium under less constraint on the directivity and the transmittable distance;
   device specification means for transmitting a response to a device search request received from the remote controller via the first communication medium; and
   remote control means for performing a device operation corresponding to a remote control request received from the remote controller via the second communication medium.
17. The electronic device according to Clause 16, wherein:
   the first communication medium is based on an infrared communication system; and
   the second communication medium is based on a local network in which each of the remote controller and the device has a unique network address.
18. The electronic device according to Clause 16, wherein the device specification means transmits a response to the remote control request via the second communication medium using address information on the remote controller included in the device search request received via the first communication medium.
19. The electronic device according to Clause 16, further comprising data transmission means for transmitting data to the remote controller via the second communication medium.
20. A remote control system for a user to operate at least one device using a remote controller, comprising:
   a device specification unit 11, 14 specifying a device located in front of the user who is holding the remote controller 10 via a first communication medium under a constraint on at least one of directivity and a transmittable distance; and
   a remote controller 11, 15 transmitting a remote control request from the remote controller to the specified device via a second communication medium under less constraint on the directivity and the transmittable distance in accordance with an instruction input from the user.
21. A remote controller operating at least one device, comprising:
   a first communication unit 14 performing communication via a first communication medium under a constraint on at least one of directivity and a transmittable distance;
   a second communication unit 15 performing communication via a second communication medium under less constraint on the directivity and the transmittable distance;
   a device specification unit specifying a device located in front of a user who is holding the remote controller 10 via the first communication medium;
   a user input unit inputting an instruction from the user; and
   a remote controller transmitting a remote control request to the specified device via the second communication medium in accordance with the instruction input from the user.
22. An electronic device to be controlled by a remote controller, comprising:
   a first communication unit 14 performing communication via a first communication medium under a constraint on at least one of directivity and a transmittable distance;
   a second communication unit 15 performing communication via a second communication medium under less constraint on the directivity and the transmittable distance;
   a device specification unit transmitting a response to a device search request received from the remote controller 10 via the first communication medium; and
   a remote controller performing a device operation corresponding to a remote control request received from the remote controller via the second communication medium.

## Claims

1. A remote control system comprising:
a first communication medium for transmitting under a constraint on at least one of directivity and transmittable distance,
a second communication medium for transmitting and receiving under less constraint on the directivity and transmittable distance,
a remote controller (10) having a transmitting and receiving unit (15) for transmitting and receiving via the second communication medium,
at least one device (A, B) having a receiving unit for receiving via the first communication medium and a transmitting and receiving unit for transmitting and receiving via the second communication medium,
device specification means (11) for specifying the device located in front of the user in accordance with a response to a device search request, the response being transmitted via the second communication medium from the device that receives the device search request transmitted via the first communication medium from the remote controller,
remote control means (11, 15) for transmitting a remote control request from the remote controller (10) to the specified device via the second communication medium in accordance with an instruction input from the user.

2. The remote control system according to Claim 1, wherein:
the first communication medium is based on an infrared communication system; and
the second communication medium is based on a local network in which each of the remote controller (10) and the device (A, B) has a unique network address.

3. The remote control system according to Claim 1, wherein:
the remote controller (10) transmits the device search request, which includes address information on the remote controller (10) on the second communication medium;
the device transmits the response to the device search request via the second communication medium using the address information included in the device search request; and
the remote controller (10) transmits the remote control request via the second communication medium using address information on the device included in the response to the device search request.

4. The remote control system according to Claim 1, further comprising data transmission means for transmitting data from the device (A,B) to the remote controller (10) via the second communication medium.

5. The remote control system according to Claim 4, wherein the data comprises moving image data, the remote controller (10) comprising a display for reproducing and outputting said moving image data.

6. The remote control system according to claim 5, wherein the device (A,B) is a television receiver, said moving image data comprising moving image data received by the television receiver.
